# EUROPÄISCHE PATENTSCHRIFT

(11) **EP 0 341 679 B1**
(45) Veröffentlichungstag und Bekanntmachung des Hinweises auf die Patenterteilung: **04.08.1993**
(21) Anmeldenummer: 89108361.0
(22) Anmeldetag: 10.05.1989
(51) Int. Cl.: B27B 5/18

(54) **Sägetisch**
Saw bench
Scie circulaire à table

(30) Priorität: 11.05.1988 DE 3816125
(43) Veröffentlichungstag der Anmeldung: 15.11.1989
(73) Patentinhaber: ROBERT BOSCH GMBH, 70442 Stuttgart (DE)
(72) Erfinder: Walz, Heinz, D-7000 Suttgart 80 (DE); Schneider, Helmut, D-7022 Leinfelden- Echterdingen 2 (DE); Zaiser, Adolf, D-7316 Koengen (DE)

(56) Entgegenhaltungen:
- EP-A- 0 066 275

## Beschreibung

### Stand der Technik

Die Erfindung geht aus von einem Sägetisch nach der Gattung des spruchs 1. Solche Sägetische ermöglichen ähnlich einer Kappsäge das Sägen von festeingespannten Werkstücken. Gemäß dem DE-GM 81 16 406 ist ein solcher Sägetisch mit festeingespanntem Sägeaggregat bekannt, bei dem die Übersetzung der Schwenkbewegung des Handhebels in die geradlinige Bewegung des Sägeblattes mittels eines am Ende des Hebels befestigten Seilzuges bewirkt wird. Dabei hängt die Länge des Verschiebeweges des Sägeaggregats direkt von der Länge des Hebels ab. Bei der im Ausführungsbeispiel angegebenen Tischhöhe von 260 mm ergibt sich damit ein Verschiebeweg von nur etwa 150 mm, wenn der Schwenkwinkel des Handhebels innerhalb des ergonomisch noch vertretbaren Bereichs von unter 40° verbleiben soll. Eine Verlängerung des Verschiebewegs auf 25 cm führt nach dem Stand der Technik zu einem Schwenkwinkel von ca. 67°, der den ergonomisch günstigen Bewegungsbereich des Armes der Bedienungsperson von ca. 30° - 40° bei weitem überschreitet.

### Vorteile der Erfindung

Dem erfindungsgemäßen Sägetisch mit den kennzeichnenden Merkmalen der Unabhängigen Ansprüche liegt die Aufgabe Zugrunde, eine ergonomisch sinnvolle Länge des Bedienungshebels und ein ergonomisch sinnvolles Übersetzungsverhältnis des Getriebes unter Einhaltung der Werkzeugtischhöhe zu erreichen. Dabei kann das Sägeblatt sowohl vorwärts als auch rückwärts geführt werden.

Durch die in den Ansprüchen 2 ff aufgeführten Maßnahmen sind vorteilhafte Weiterbildungen und Verbesserungen des im Anspruch 1 angegebenen Sägetisches möglich. Die Ansprüche 2 bis 8 betreffen verschiedene Ausbildungen des Übersetzungsgetriebes; eine Doppelspindel mit verschiedenen Steigungen erlaubt eine günstige Übersetzung. Bei der Verwendung einer Kugelumlaufspindel verringert sich die Reibung erheblich. Ein Spindeltrieb, oder eine Kugel- oder Rollenführung gewährleisten gleichzeitig eine Geradführung des Schlittens für das Sägeblatt bzw. den Motor. Bei der Kugel- oder Rollenführung kann der Schwenkbereich des Hebels leicht justiert werden. Die Verwendung von Hydraulikzylindern hat den zusätzlichen Vorteil, daß in den Endlagen des Verschiebewegs der Rücklaufstoß gedämpft wird. Die geschwindigkeitsproportionale Dämpfung ist auch während des Sägens beim Verklemmen des Sägeblatts vorteilhaft und sicherer.

Gemäß Anspruch 10 kann der Handhebel auch durch einen elektrischen Stellmotor ersetzt werden. Besonders vorteilhaft ist es gemäß Anspruch 11, den Schwenkhebel bzw. Vorschubhebel an der Rückwand des Sägetisches anzuordnen. Damit bleibt er außerhalb des Auflagebereichs von zu sägenden Werkstücken und ermöglicht die Anbringung von Führungs- und Befestigungsleisten am Sägetisch an allen vier Seiten. Die Ansprüche 14 bis 17 beschreiben ergonomisch besonders günstige Ausführungen des Hebels. Insbesondere hat der mit seiner Achse quer zur Schwenkrichtung verlaufende Handgriff den Vorteil, daß die Bedienungsperson während der Bedienung des Hebels nicht umgreifen muß.

### Zeichnung

10 Ausführungsbeispiele der Erfindung sind in der Zeichnung dargestellt und in der nachfolgenden Beschreibung näher erläutert.
Figur 1 zeigt ein erstes Ausführungsbeispiel in Ansicht,
Figur 2 zeigt einen Schnitt durch den Sägetisch des ersten Ausführungsbeispiels und
Figur 3 zeigt das Getriebe des ersten Ausführungsbeispiels.
Figur 4 zeigt ein Getriebe nach einem zweiten Ausführungsbeispiel,
Figur 5 zeigt einen Querschnitt durch das dritte Ausführungsbeispiel,
Figur 6 zeigt das Getriebe eines vierten Ausführungsbeispiels und
Figur 7 zeigt das Getriebe eines fünften Ausführungsbeispiels.
Figur 8 zeigt eine teilweise aufgeschnittene perspektivische Ansicht eines sechsten Ausführungsbeispiels und
Figur 9 zeigt eine Ansicht des sechsten Ausführungsbeispiels.
Figur 10 zeigt einen Querschnitt durch das siebte Ausführungsbeispiel und
Figur 11 zeigt einen Schnitt durch das Getriebe nach dem siebten Ausführungsbeispiel.
Figur 12 zeigt einen Querschnitt eines achten Ausführungsbeispiels und
Figur 13 eine Variante des Zahnrades des achten Ausführungsbeispiels.
Figur 14 zeigt eine Prinzipskizze eines neunten Ausführungsbeispiels und
Figur 15 die Ansicht eines zehnten Ausführungsbeispiels.

### Beschreibung der Ausführungsbeispiele

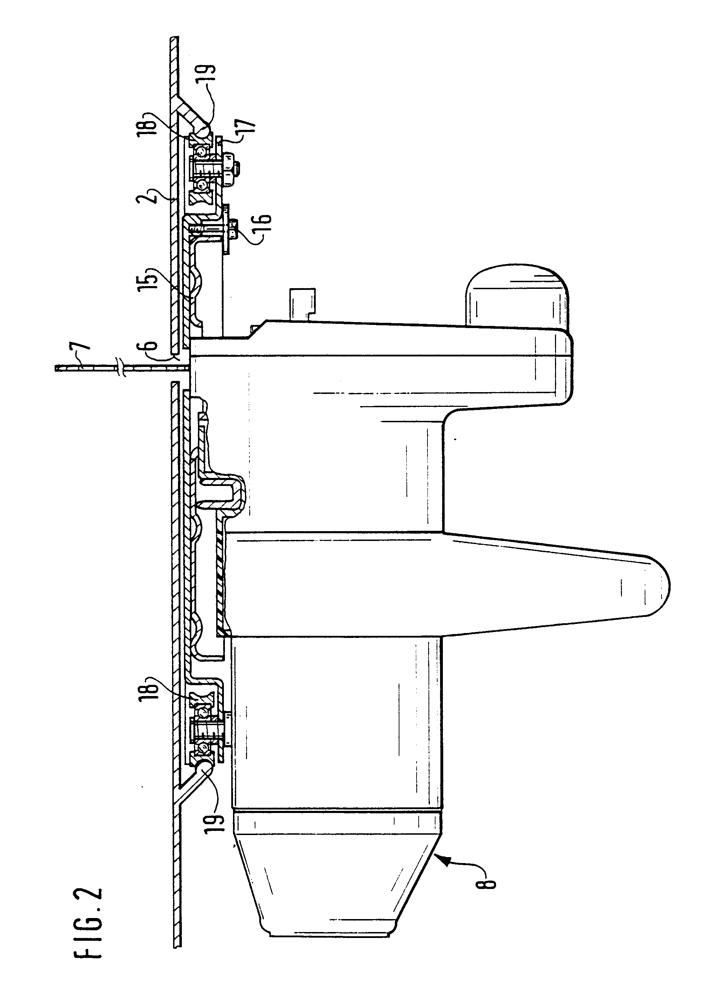

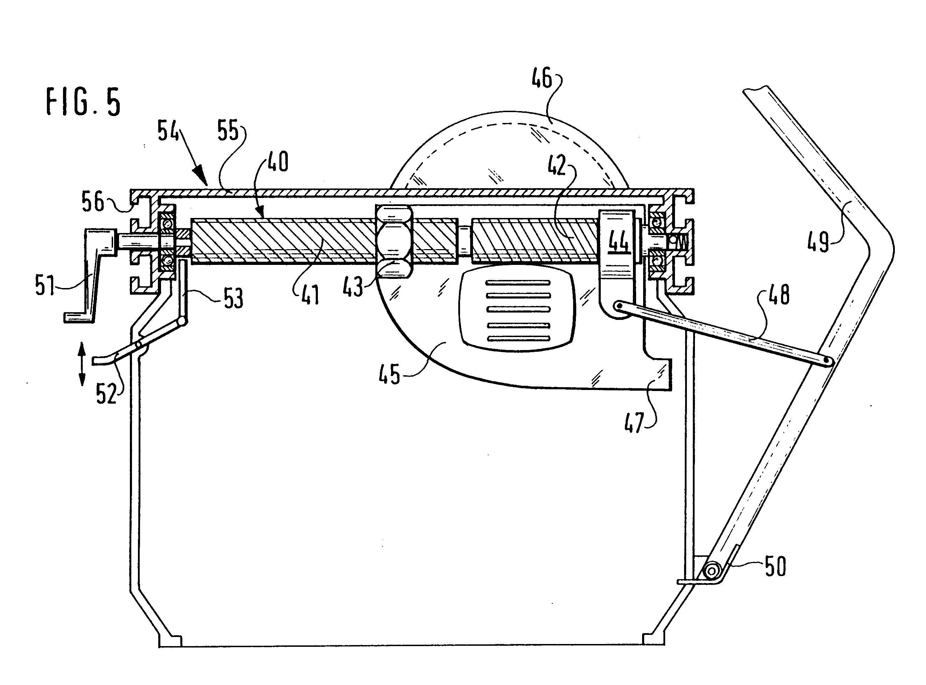

Der Sägetisch 1 weist eine Tischplatte 2 mit ringsum umlaufenden Führungs- und Befestigungsleisten 3 mit vorzugsweise T-förmigen Nuten 4 (siehe auch Figur 5) zum Anbringen von Anschlägen 5 auf. Die Tischplatte 2 weist in ihrem Mittelbereich einen langgestreckten Schlitz 6 auf, der sich in der Ebene eines darin verschieblichen Sägeblattes 7, das zu einem in Figur 2 gezeigten Sägeaggregat 8 gehört, befindet. Zum Sägen wird das Sägeblatt 7 in der mit einem Pfeil bezeichneten Vorschubrichtung bewegt. Die Tischplatte 2 ist mit einem Gehäuse 9 verbunden, das abnehmbare Aufstellfüße 10 aufweist.

An der der Vorschubrichtung abgewandten Rückwand 11 des Gehäuses 9 sind Schlitze 12 angeordnet. Durch diese greift ein aus zwei parallelen Rohrstücken bestehender Schwenkhebel 13, der an seinem freistehenden Ende einen quer zu den Rohrstücken stehenden und diese verbindenden Handgriff 14 aufweist. Die wirksame Länge L des Hebels 13 vom Handgriff 14 bis zu seinem Drehpunkt beträgt vorzugsweise ca. 500 - 800 mm.

Das in Figur 2 gezeigte Sägeaggregat 8 ist eine handelsübliche Handkreissäge mit Fußplatte 15. Die Fußplatte 15 ist beispielsweise mit Schrauben 16 auf einen Schlitten 17 montiert. Der Schlitten 17 weist Rollen 18 auf, die in Führungen 19 der Tischplatte 2 laufen. Der Schlitten 17 kann auch schwenkbar an dem Sägetisch 1 befestigt sein, um das Sägeblatt 7 für Gehrungsschnitte in verschiedene Winkelstellungen zur Tischplatte 2 zu bringen. Im Ausführungsbeispiel haben die Führungen 19 in dem mit den Rollen 18 in Kontakt kommenden Bereichen kreisförmigen Querschnitt, so daß die Rollen 18 mit ihrem angepaßten schalenförmigen Querschnitt die Führungen 19 hintergreifen. Damit erfolgt sogleich eine horizontale wie vertikale Festlegung des Schlittens 17 gegenüber dem Sägetisch 2.

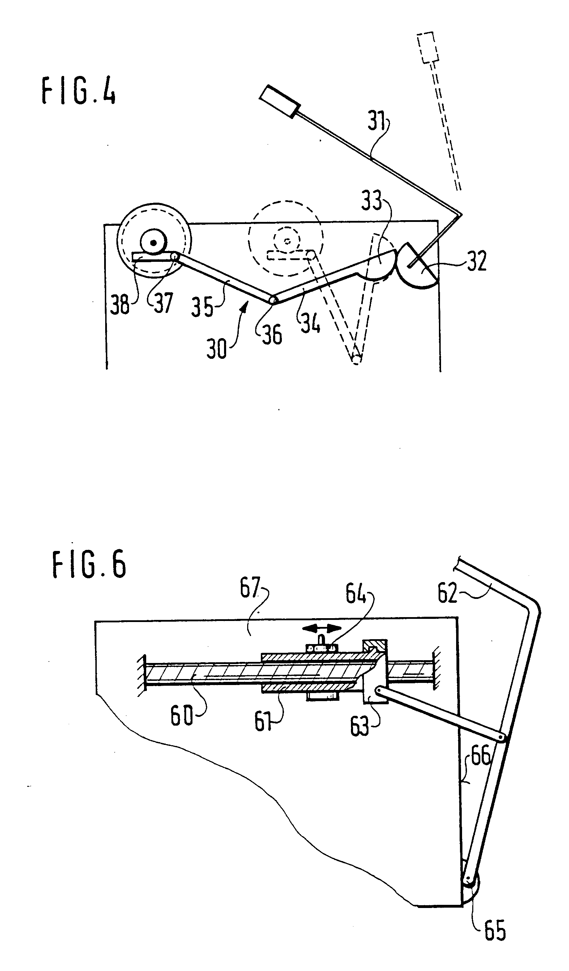

In Figur 3 ist als Getriebe 20 zur Übersetzung der Schwenkbewegung des Hebels 13 in die lineare Bewegung des Sägeaggregats 8 ein Kegelradgetriebe 21 gezeigt. Der Schwenkhebel 13, der in diesem Fall vorzugsweise die Rückwand 11 des Gehäuses 9 durchdringt, ist mit einem Kegelrad 22 verbunden. Dieses Kegelrad kämmt mit einem rechtwinklig dazu angeordneten Kegelrad 23. Auf der Welle des Kegelrades 23 sitzt ggf. in passendem Abstand eine Rolle 24. Über diese Rolle 24 und eine in Vorschubrichtung des Sägeaggregats entfernt angeordnete Rolle 25 ist ein Seilzug 26 gespannt, an dem das Sägeaggregat 8 bzw. der Schlitten 17 befestigt ist.

Der Schwenkhebel 13 ist steckbar in einem Rohrstück 27 befestigt, so daß er zum Transport herausgenommen werden kann. Er kann ebenfalls herausgenommen werden, wenn der Sägetisch als herkömmlicher Kreissägentisch mit feststehendem Sägeblatt verwendet wird. In diesem Fall wird der Schlitten 17 arretiert und beim Sägen in gewohnter Weise das Werkstück auf das Sägeblatt zubewegt.

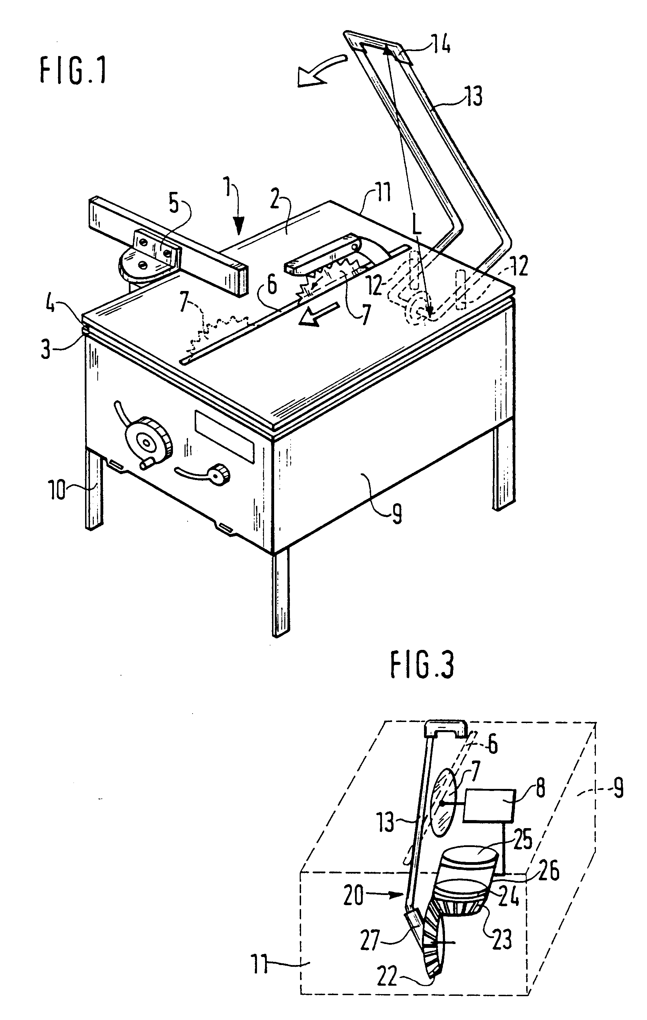

Der Seilzug kann auch über senkrecht stehende Rollen geführt werden. Dabei wird ein Stirnradgetriebe statt des Kegelradgetriebes verwendet. Um eine Richtungsumkehr der Verschiebebewegung des Motors zu erreichen, kann ein Hohlrad verwendet werden. Auch Planetengetriebe können vorteilhaft eingesetzt werden. Statt eines Seils kann auch ein Zahnriemen oder eine Kette (Fahrradkette) eingesetzt werden. Um ein Durchrutschen des Seils oder Riemens zu verhindern, können die Seil- oder Riemenenden auch ähnlich einer Autofensterkurbel einige Windungen um die Umlenkrollen aufgewickelt werden. Gegebenenfalls kann das Seil auch über Umlenkrollen oder Führungen z.B. wie bei einem Bowdenzug geführt werden. Aus Gründen der Arbeitssicherheit kann an den Handhebeln oder den Seilzügen nach den Ausführungsbeispielen der Figuren 1 und 2 eine Rückholfeder angebracht sein, die das Sägeblatt aus Sicherheitsgründen in die Ausgangsstellung vor dem Sägen zurückführt.

Zum Sägen wird ein Werkstück auf die Tischplatte, gegebenenfalls an den Anschlag 5 gelegt. Das Sägeblatt befindet sich zu Anfang in seiner dem Hebel 13 nächstgelegenen hinteren Stellung. Nach Einschalten des Sägeaggregats wird der Hebel 13 auf die vor dem Sägetisch 1 stehende Bedienungsperson hin in Pfeilrichtung heruntergezogen bis in seiner Endstellung der Handgriff 14 sich ca. 200 mm von der Tischplatte 2 entfernt befindet. Dabei bewegt sich das Sägeblatt in Vorschubrichtung auf die Bedienungsperson zu entlang dem Schlitz 6.

Gemäß dem zweiten Ausführungsbeispiel nach Figur 4 wird die Hebelbewegung mittels eines Schubkurbelgetriebes 30 in eine Linearbewegung übersetzt. Der Handhebel 31 ist an einem Zahn- oder Reibrad 32 befestigt, der das Zahn- oder Reibrad 33 antreibt, das mit dem Hebel 34 des Schubkurbelgetriebes verbunden ist. Die Stange 35 ist über Gelenke 36 und 37 mit dem Führungsschlitten 38 der Kreissäge verbunden. Die Stellung des Handhebels 31 und des Getriebes 30 vor dem Sägeschnitt ist gestrichelt dargestellt. Das Schubkurbelgetriebe 30 ist vorteilhaft so ausgelegt, daß die Totpunkte nicht in den Fahrbereich des Führungsschlittens fallen.

Nach dem dritten Ausführungsbeispiel in Figur 5 weist eine drehbar gelagerte Spindel 40 zwei Bereiche 41 und 42 mit gegebenenfalls unterschiedlicher Steigung und/oder unterschiedlicher Steigungsrichtung auf, in die jeweils eine Mutter 43 bzw. 44 eingreift. An der Mutter 43 ist das Sägeaggregat 45 mit dem Sägeblatt 46 befestigt. Die Spindel 40 kann gleichzeitig als Linear-Führung für das Sägeaggregat 45 dienen. Die Schutzhaube des Sägeaggregats weist einen Anschlußstutzen 47 für einen Absaugschlauch auf. An der zweiten Mutter 44 ist über eine Stange 48 der Vorschubhebel 49 angebracht. Eine Rückholfeder 50 im Drehgelenk des Vorschubhebels sorgt für ein selbständiges Zurückfahren des Sägeaggregats in die in der Figur 5 dargestellte Ausgangsposition. Die Spindel 40 weist an ihrem vorderen Ende alternativ eine Handkurbel 51 auf; an die Stelle der Handkurbel kann auch ein elektrischer Stellmotor treten. Über einen Hebel 52 mit Riegelglied 53 läßt sich die Spindel zur Festlegung des Sägeaggregats beim Transport oder beim Tischsägenbetrieb arretieren.

Das Spindelgetriebe (40, 43, 44) ist in einen Sägetisch 54 mit einer Tischplatte 55 eingesetzt, die wiederum am Außenrand Befestigungsleisten 56 aufweist.

Durch eine Bewegung des Vorschubhebels 49 wird die Spindel 40 durch die Mutter 44 in Drehung versetzt. Die Spindelumdrehung erzeugt in der zweiten Mutter 43 eine Linearbewegung des Sägeaggregats 45. Durch unterschiedliche Steigung der Gewinde in den Bereichen 41 und 42 kann eine Getriebeübersetzung erfolgen. Für die Gewinde sind Steigungen zwischen 30° und 50° vorteilhaft. Die Gewinde können gegebenenfalls mehrgängig ausgeführt werden. Die Muttern können Gleitmuttern oder Muttern mit Wälzkörpern sein, z.B. auch Kugelumlaufmuttern bzw. Teil einer Kugelumlaufspindel. Im einfachsten Falle bietet sich ein Rillenkugellager ohne Innenring und entsprechend gewalzte mehrgängige Kugelbahnen auf der Spindel an. Der Spindeltrieb kann gleichzeitig auch als Führungsbahn für das Sägeaggregat dienen. Die Rückholfeder 50 kann als Drehfeder mit rundem oder rechteckigem Querschnitt ausgebildet sein. Alternativ kann auch eine Rollfeder beispielsweise direkt am Sägeaggregat 45 befestigt sein.

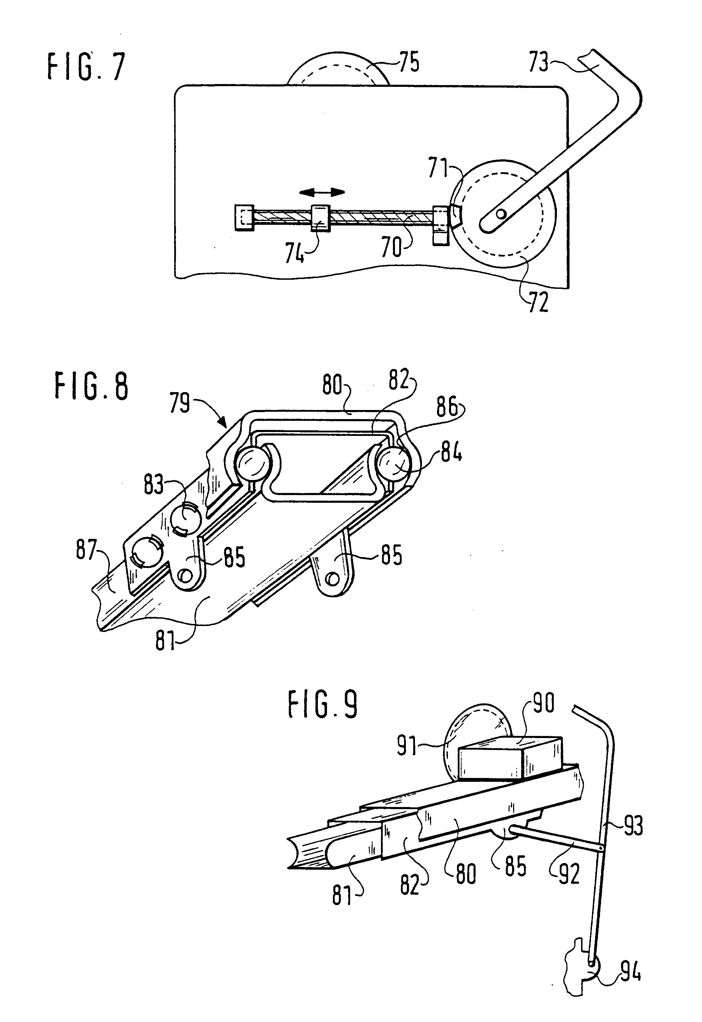

Nach dem vierten Ausführungsbeispiel in Figur 6 ist die Spindel 60 drehstarr gelagert. Über das Gewinde der Spindel 60 wird eine Hülse 61 mit Innen- und Außengewinde mittels des Schwenkhebels 62 geschoben. Der Schwenkhebel 62 ist an einem mit der Hülse 61 drehbar aber axial fest verbundenen Ring 63 angelenkt. Die Hülse 61 dreht sich beim Schwenken des Hebels 62 gegenüber der drehfesten Spindel 60 und einer gegenüber dem Sagetisch 67 drehfesten Mutter 64 auf ihrem Außengewinde. Außen an der Mutter 64 ist das nicht gezeigte Sägeaggregat befestigt. Durch entsprechende Steigungswahl kann der gewünschte Fahrweg eingestellt werden. Der Schwenkhebel 62 ist in einem Drehgelenk 65 an der Rückwand 66 des Sägetisches 67 angelenkt.

Bei Betätigung des Handhebels 62 wandert die Hülse 61 auf der Spindel 60 von rechts nach links bzw. umgekehrt; gleichzeitig wandert die Mutter 64 vom Ring 63 der Hülse 61 weg nach links bzw. umgekehrt. Dadurch ergibt sich die gegenüber dem kurzen Hebelweg gewünschte Verlängerung des Fahrwegs des Sägeaggregats.

In Figur 7 ist die drehbar gelagerte Spindel 70 mit einem Kegelrad 71 versehen, die mit dem Kegelrad 72 des Handhebels 73 kämmt. An der nicht mitdrehenden Mutter 74 ist das nicht gezeigte Sägeaggregat mit dem Sägeblatt 75 befestigt. Bei allen Spindelgetrieben läßt sich in einfacher Weise der Handhebel durch einen Stellmotor ersetzen bzw. ergänzen.

In Figur 8 ist als sechstes Ausführungsbeispiel eine Kugelflachführung 79 gezeigt, die aus einer oberen Führungsschiene 80, einer unteren Führungsschiene 81 und einem Kugelkäfig 82 besteht. In den Durchbrechungen 83 des Kugelkäfigs 82 sind Kugeln 84 gehalten. Der Kugelkäfig 82 weist Befestigungslaschen 85 auf. Die Kugeln 84 rollen in den gewölbten Laufbahnen 86 und 87 der Führungsschienen ab. Die Laufbahnen sind dabei so gegeneinander verspannt, daß eine Zwangsabrollung in der Weise erfolgt, daß sich bei festgehaltener unterer Führungsschiene 81 die obere Führungsschiene 80 gegenüber dem Kugelkäfig 82 mit der doppelten Geschwindigkeit in Längsrichtung bewegt.

Dieser Sachverhalt wird ausgenutzt zum Antrieb des Sägeaggregats 90 gemäß der Ausführung nach Figur 9. Das Sägeaggregat 90 mit Sägeblatt 91 ist fest mit der oberen Führungsschiene 80 verbunden, die damit als verschiebbarer Schlitten 80 dient. Die untere Führungsschiene 81 ist fest mit dem Gehäuse der Unterflursäge 1 verbunden. An der Befestigungslasche 85 des Kugelkäfigs 82 ist eine Stange 92 befestigt, die an dem Vorschubhebel 93 angelenkt ist. Der Vorschubhebel 93 ist in üblicher Weise drehbar in einem mit dem Gehäuse der Säge verbundenen Gelenk 94.

Die über Reibschluß zwangsgeführten Kugeln bewirken, daß beim Antrieb des Käfigs 82 sich die zweite Führungsbahn 80 gegenüber der festgehaltenen Führungsbahn 81 um den doppelten Weg verschiebt als der Käfig 82 selbst. Damit wird die gewünschte Übersetzung des Hebelwegs in die Linearbewegung des Sägeaggregats 90 erreicht. Die Reibschlußkräfte der Kugeln lassen sich z.B. auf 100 N Vorschubkraft auslegen. Damit lassen sich Sägearbeiten einwandfrei durchführen. Andererseits ist in den Endlagen der Flachführung ein Durchrutschen der Kugeln erzielbar, um etwa die Schwenkhebelposition für eine bestimmte Sägearbeit in eine ergonomisch günstige Lage zu versetzen.

Die Flachführung dient zweckmäßigerweise auch als Aggregatlinearführung. Die Integration von Vorschubkrafteinleitung und Linearführung ist nicht nur kostengünstig, sondern sie läßt sich auch besonders nahe beim Sägeblatt anbringen. Dies hat statische Vorteile, denn der ideale Bereich für Führung und Vorschubkrafteinleitung liegt in der Sägeblattebene.

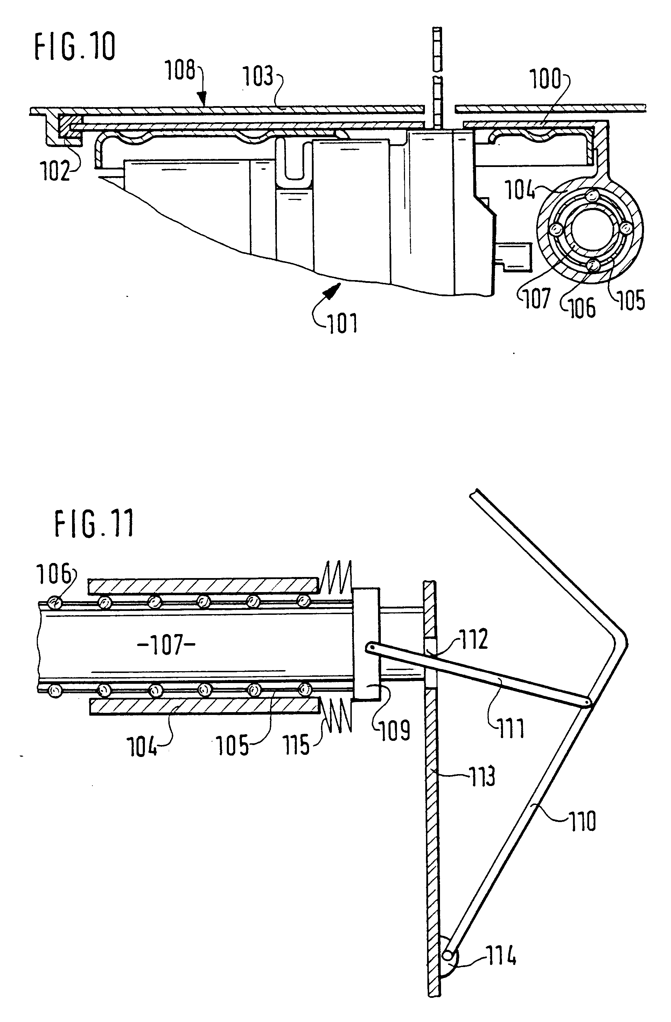

In den Figuren 10 und 11 ist als siebtes Ausführungsbeispiel eine weitere Variante einer Kugelführung gezeigt. Ein Schlitten 100, an dem das Sägeaggregat 101 befestigt ist, ist einerseits in einem Gleitstück 102 verschieblich gelagert, das an der Tischplatte 103 eines Sägetisches 108 befestigt ist. Die andere Seite des Schlittens 100 weist ein Führungsrohr 104 auf. Darin befinden sich von einem Käfig 105 gehaltene Kugeln 106, die sich nach innen gegen eine Führungsstange 107 abstützen. Die Führungsstange 107 ist fest mit dem Sägetisch 108 verbunden.

In Figur 11 ist gezeigt, daß der Käfig 105 an seinem Ende einen Ring 109 trägt, an dem der Schwenkhebel 110 mittels einer Stange 111 angelenkt ist. Die Stange 111 durchgreift einen Schlitz 112 an der Rückwand 113 des Sägetisches 108. Der Schwenkhebel 110 ist wie in den vorherigen Ausführungsbeispielen außerdem noch in einem Drehgelenk 114 an der Rückwand 113 angelenkt. Um Käfig 105 und Kugeln 106 zu schützen, ist zwischen dem Ring 109 und dem Führungsrohr 104 ein Faltenbalg 115 angebracht.

Die Funktion dieser Kugelführung 108 entspricht der der beiden vorherigen Ausführungsbeispiele. Beim Verschieben des Ringes 109 durch den Hebel 110 um die Strecke X bewegt sich das Führungsrohr 104 mit dem daran befestigten Schlitten 100 um die Strecke 2X.

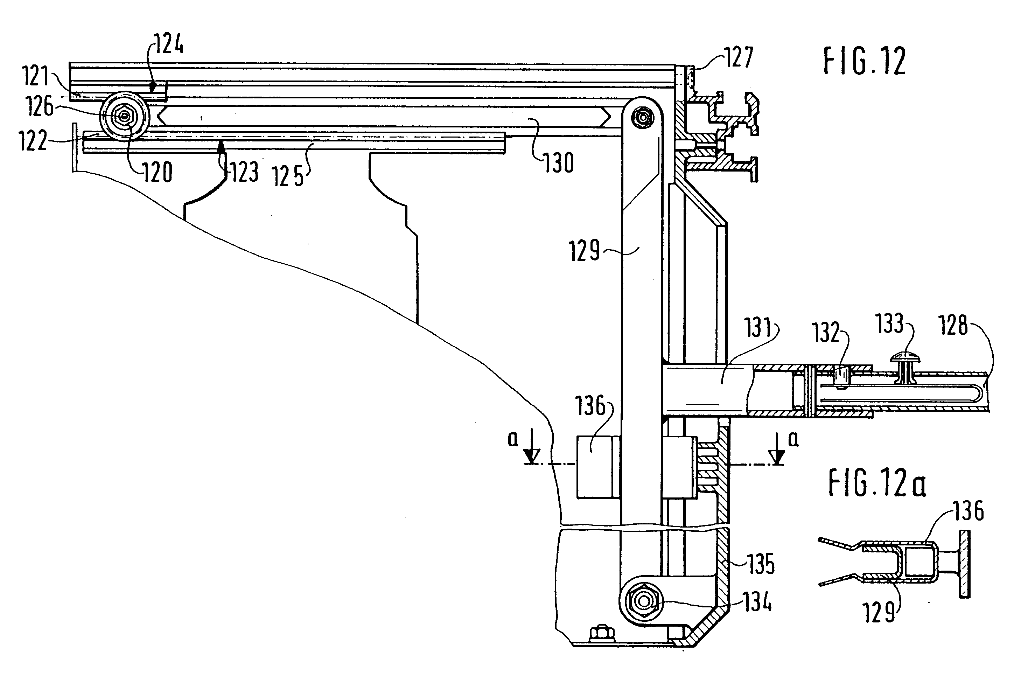

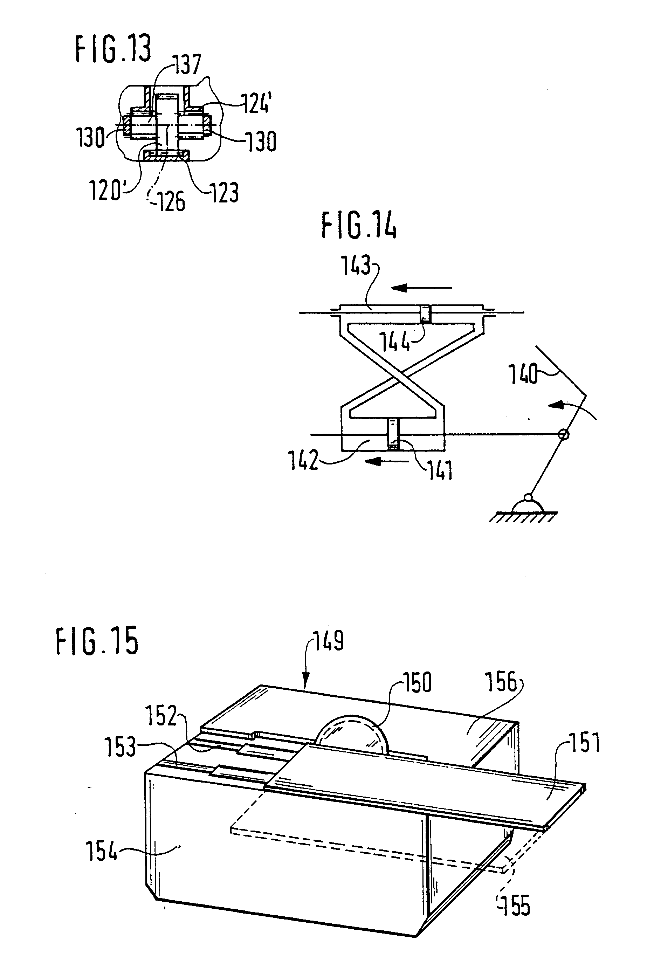

Gemäß dem achten Ausführungsbeispiel nach Figur 12 und 13 können die Kugeln auch durch Zahnräder 120 ersetzt werden, die in Zahnstangen 121 und 122 zweier Führungsschienen 123 und 124 laufen. Die Führungsschiene 124 ist fest mit dem Sägetisch 127 verbunden, während an der schiebbaren Führungsschiene 123 ein Schlitten 125 mit einem Sägeaggregat befestigt ist. Eine derartige Zahnradführung läßt sich genauso wie die vorher beschriebene Kugelflachführung in der Unterflursäge verwenden, wenn der Vorschubhebel 128, 129 über eine Schubstange 130 an der Achse 126 des Zahnrads 120 angreift. In diesem Fall ergibt sich wiederum ein Übersetzungsverhältnis von i = 2. Bei diesem Ausführungsbeispiel ergibt sich bei einem Schwenkwinkel des Vorschubhebels 128 von 30° ein Verschiebeweg des Sägeaggregats von 345 mm.

Der Vorschubhebel besteht aus einem Rohrstück 128 mit nicht gezeigtem Handgriff und einem Stab 129 an den ein kurzes Rohrstück 131 angeschweißt ist, in das das Rohrstück 128 einschiebbar und arretierbar ist. Dazu dient der federbelastete Raststift 132, der durch Druck auf den Knopf 133 entriegelbar ist. Der Stab 129 ist in einem mit dem Gehäuse des Sägetisches 127 verbundenen Drehgelenk 134 gelagert, das an der Rückwand 135 des Sägetisches 127 innerhalb des Gehäuses befestigt ist. In seiner gehäusenächsten Stellung (wie in Figur 12 gezeigt) ist der Stab 129 mittels einer diesen federnd umschließenden Bandfeder 136 arretierbar. In dieser Position ist das Sägeaggregat ortsfest fixiert, so daß der Sägetisch 127 als herkömmlicher Kreissägetisch dient.

Andere Übersetzungsverhältnisse als i = 2 sind erzielbar, wenn gemäß Figur 13 auf die Achse 126 ein oder zwei weitere Zahnräder 137 mit gegenüber dem Zahnrad 120 geringerem (oder größerem) Wälzkreis aufgesetzt sind und mit seiner Verzahnung in eine dem Walzradius der Zahnräder 137 angepaßte Führungsschiene 124' eingreift.

Gemäß Figur 14 kommt im neunten Ausführungsbeispiel ein hydraulisches Getriebe zum Einsatz. Der Handhebel 140 ist mit dem Kolben 141 des Hydraulikzylinders 142 verbunden. Die beiden Kolbenräume des Zylinders 142 sind gegebenenfalls über Kreuz mit den Kolbenräumen des Hydraulikzylinders 143 verbunden. Mit dem Kolben 144 dieses Zylinders wird das Sägeaggregat verbunden. Somit bewirkt eine Vorschubbewegung des Handhebels 140 gleichzeitig eine wegen der unterschiedlichen Kolbenabmessungen ins schnellere übersetzte Vorschubbewegung des Sägeaggregats. Durch entsprechende Wahl der Leitungsführung zwischen den Zylindern 142 und 143 kann auf einfache Weise die Fahrwegrichtung bestimmt werden. Auch die Wegübersetzung kann entsprechend den jeweiligen Erfordernissen durch Wahl der Kolbendurchmesser beeinflußt werden. Durch die Verschaltung der beiden Zylinder ist sowohl eine Vorschub- als auch eine Rückschubbewegung des Sägeaggregats möglich. In den Endlagen bewirken die Hydraulikzylinder automatisch eine Dämpfung des Rücklaufstoßes.

In Figur 15 ist ein transportabler Unterflursägetisch 149 gezeigt, die sich gleichzeitig auch als Formatkreissägetisch einsetzen läßt. Das Sägeblatt 150 wird bei dieser Verwendung zweckmäßigerweise stationär in einer beliebigen Stellung festgelegt. Es kann aber, vorzugsweise bei feststehendem Tisch, auch wie bei den anderen Ausführungsbeispielen mittels eines nicht gezeigten Hebels verschoben werden.

Ein Teil 151 der Tischplatte ist längs in Schnittrichtung des Sägeblattes verschiebbar. Dazu dienen z.B. die aus den Figuren 8 und 9 bekannten Teleskopführungen 152, 153, deren eine Führungsschiene mit dem Gehäuse 154 des Sägetisches 149 und die andere mit dem verschiebbaren Tischplattenteil 151 verbunden ist.

An diese können zur Vergrößerung der Auflagefläche für ein Werkstück, z.B. mittels Schienen, Verbreiterungen 155 oder Verlängerungen angebaut werden, die zum Transport wieder abgenommen werden. In eingeschobenem Zustand ist die verschiebbare Tischhälfte 151 nicht länger als die feststehende Tischplatte 156 und überragt das Gehäuse 154 nicht. Dies erleichtert das Aufräumen und Transportieren des Sägetisches und dient der Unfallsicherheit.

Zum Sägen wird ein Werkstück auf den Tischplattenteil 151 gelegt und zusammen mit diesem auf das Sägeblatt 150 zubewegt. Die Ausführung nach Figur 15 ermöglicht sowohl ein ziehendes Kappsägen, als auch ein vollwertiges Formatsägen mit handlichem, bei der Arbeit nicht störendem verschiebbaren Tisch. Im Bedarfsfall können auch beide Arbeitsweisen kombiniert werden.

Die Erfindung beschränkt sich nicht auf die konkreten Ausführungsbeispiele. Insbesondere können die einzelnen Ausführungsbeispiele mit anderen kombiniert werden, insbesondere die Getriebe ausgetauscht werden. Die Funktion des zweiten und der folgenden Ausführungsbeispiele entspricht, soweit nicht abweichend beschrieben, der des ersten Beispiels.

## Patentansprüche

1. Sägetisch (1) mit ebener, zur Auflage von Werkstücken vorgesehener Tischplatte (2) und mit einem unter der Tischebene angeordneten, von einem Motor angetriebenen und mit einem Sägeblatt (7) ausgestatteten Sägeaggregat (8), das auf einem unterhalb der Tischebene angeordneten und in mit dem Sägetisch (1) verbundenen Führungen (19) geführten Schlitten (17) in der Ebene des Sägeblattes (7) entlang der Tischebene verschieblich ist, wobei die Verschiebung des Sägeaggregates (8) durch einen über die Tischplatte (2) des Sägetisches (1) hinausstehenden zweiarmigen Hebel (13) mit Handgriff (14) an einem der Hebelarme erzeugbar ist, dadurch gekennzeichnet, daß der andere Hebelarm des Hebels (13, 31, 49, 62, 73, 93, 110, 140) mit einem untersetzenden Getriebeglied (22, 32, 44, 72, 82, 105, 120, 141) verbunden ist, das mindestens mit einem zweiten gegenüber dem Sägetisch (1) beweglichen Getriebeglied (26, 34, 40, 70, 80, 107, 122/123, 144) zusammenarbeitet, das sich im wesentlichen entlang der Tischplatte (2) erstreckt und mit dem Schlitten (17) verbunden ist.

2. Sägetisch nach Anspruch 1, dadurch gekennzeichnet, daß das Getriebe (20) eine Schubkurbel (30) aufweist.

3. Sägetisch nach Anspruch 1, dadurch gekennzeichnet, daß das Getriebe (20) eine Spindel (40, 60, 70) aufweist.

4. Sägetisch nach einem der Ansprüche 1 oder 3, dadurch gekennzeichnet, daß das Getriebe (20) ein Kegelradgetriebe (21; 71, 72) ist

5. Sägetisch nach Anspruch 1, dadurch gekennzeichnet, daß das Getriebe (20) eine Kugel- oder Rollenführung (79, 104-107) mit angetriebenem Käfig (82) aufweist.

6. Sägetisch nach Anspruch 1, dadurch gekennzeichnet, daß das Getriebe (20) ein Zahngetriebe mit Zahnstangen (121, 122) und darin sich abwälzenden und an ihrer Achse (126) angetriebenen Zahnrädern (120) ist.

7. Sägetisch nach Anspruch 1, dadurch gekennzeichnet, daß das Getriebe (20) aus miteinander verbundenen Hydraulik- oder Pneumatikzylindern (142, 143) besteht.

8. Sägetisch nach einem der vorhergehenden Ansprüche 3, 4 oder 5, dadurch gekennzeichnet, daß das Getriebe (79, 104-107) gleichzeitig die Führungen für den verschiebbaren Schlitten (17, 80, 100, 125) verkörpert.

9. Sägetisch (1) mit ebener, zur Auflage von Werkstücken vorgesehener Tischplatte (2) und mit einem unter der Tischebene angeordneten, von einem Motor angetriebenen und mit einem Sägeblatt (7) ausgestatteten Sägeaggregat (8), das auf einem unterhalb der Tischebene angeordneten und in mit dem Sägetisch (1) verbundenen Führungen (19) geführten Schlitten (17) in der Ebene des Sägeblattes (7) entlang der Tischebene verschieblich ist, wobei die Verschiebung des Sägeaggregates (8) durch einen über die Tischplatte (2) des Sägetisches (1) hinausstehenden zweiarmigen Hebel (13) mit Handgriff (14) an einem der Hebelarme erzeugbar ist, dadurch gekennzeichnet, daß der andere Hebelarm des Hebels (13) an einen gegenüber einer drehbaren Hülse (61) axial festen Ring (63) angelenkt ist; welche drehbare Hülse (61) mit einem Innen- und einem Außengewinde versehen ist, und welche einerseits mit einer sich im wesentlichen horizontal entlang der Tischplatte (2) erstreckenden gehäusefesten Spindel (60) und andererseits mit einer gegenüber dem Sägetisch (67) drehfesten und gegenüber der Spindel (60) axial beweglichen Mutter (64) zusammenarbeitet, die mit dem Schlitten (17) verbunden ist.

10. Sägetisch nach einem der vorhergehenden Ansprüche, dadurch gekennzeichnet, daß die Verschiebung des Sägeaggregates (12, 20, 45, 90) alternativ oder zusätzlich von einem elektrischen Stellmotor zu bewerkstelligen ist, der über das vorzugsweise untersetzende Getriebe (20) mit dem Sägeaggregat (8, 45, 90, 101) in Verbindung steht.

11. Sägetisch nach einem der vorhergehenden Ansprüche, dadurch gekennzeichnet, daß der Hebel (13, 34, 49, 62, 73, 93, 110, 128, 140) an der der Vorschubrichtung des Sägeblattes (7, 46, 75, 91, 150) abgelegenen Rückwand (11, 66) des Sägetisches (1, 54, 67, 127, 149) angeordnet ist.

12. Sägetisch nach einem der vorhergehenden Ansprüche, dadurch gekennzeichnet, daß der Hebel (62, 49, 93, 110, 140) in einem an der Rückwand (11, 66, 113) des Sägetisches (54, 67, 108) angeordneten Drehgelenk (65, 94, 114, 134) gelagert ist.

13. Sägetisch nach einem der Ansprüche 1 bis 11, dadurch gekennzeichnet, daß der Hebel (13, 31, 73, 111, 128) die Rückwand (11, 66, 113) des Sägetisches (1, 108, 127) durchdringt.

14. Sägetisch nach einem der vorhergehenden Ansprüche, dadurch gekennzeichnet, daß der Hebel (13, 31, 49, 62, 73, 93, 110, 128) sich in der Ebene des Sägeblattes (7, 46, 75) befindet.

15. Sägetisch nach einem der vorhergehenden Ansprüche, dadurch gekennzeichnet, daß der Hebel (6, 28, 34, 52, 62, 73, 93, 110) seine tischnahe Endstellung erreicht, wenn der Handgriff (14) sich in einer Höhe von ca. 200 mm über der Tischplatte (2, 55, 103, 151) befindet.

16. Sägetisch nach einem der vorhergehenden Ansprüche, dadurch gekennzeichnet, daß der Hebel (6, 28, 34, 52, 62, 73, 93, 110) eine Länge von ca. 500 - 800 mm aufweist.

17. Sägetisch nach einem der vorhergehenden Ansprüche, dadurch gekennzeichnet, daß der Hebel (13, 34, 49, 62, 73, 93, 110, 128, 140) einen quer zur Schwenkrichtung verlaufenden Handgriff (14) aufweist.

18. Sägetisch nach einem der vorhergehenden Ansprüche, dadurch gekennzeichnet, daß der Sägetisch (1, 54, 67, 127, 149) an mindestens zwei Seiten Befestigungsleisten (3, 56) zur Anbringung von Anschlägen (5) oder zusätzlichen Tischplattenelementen (155) zur Verbreiterung des Tisches (1, 54, 67, 127, 149) aufweist.

19. Sägetisch nach einem der vorhergehenden Ansprüche, dadurch gekennzeichnet, daß als Sägeaggregat (8, 45, 90, 101) eine Handkreissäge in den Sägetisch (1, 54, 67, 127, 149) einsetzbar ist.

20. Sägetisch nach einem der vorhergehenden Ansprüche, dadurch gekennzeichnet, daß er abnehmbare Aufstellfüße (10) besitzt.

21. Sägetisch nach einem der vorhergehenden Ansprüche, dadurch gekennzeichnet, daß ein Teil (151) des Sägetisches (149) zur Verwendung als Formatkreissäge verschieblich ist.

22. Sägetisch nach Anspruch 21, dadurch gekennzeichnet, daß der verschiebliche Teil (151) nicht länger als die feststehende Tischplatte (156) ausgeführt ist und in Teleskopführungen (152, 153) gelagert ist.

## Claims

1. Sawbench (1) having a flat bench top (2), intended for the support of workpieces, and having a sawing unit (8), disposed below bench level, driven by a motor and equipped with a saw blade (7), which sawing unit is displaceable on a carriage (17), disposed beneath bench level and guided in guides (19) connected to the sawbench (1), in the plane of the saw blade (7) along the level of the bench, the displacement of the sawing unit (8) being able to be generated by a two-armed lever (13), projecting over the bench top (2) of the sawbench (1) and having a handle (14) on one of the lever arms, characterised in that the other lever arm of the lever (13, 31, 49, 62, 73, 93, 110, 140) is connected to a reducing gear member (22, 32, 44, 72, 82, 105, 120, 141), which interacts at least with a second gear member (26, 34, 40, 70, 80, 107, 122/123, 144) which is movable in relation to the sawbench (1), extends essentially along the bench top (2) and is connected to the carriage (17).

2. Sawbench according to Claim 1, characterised in that the gearing (20) exhibits a thrust crank (30).

3. Sawbench according to Claim 1, characterised in that the gearing (20) exhibits a spindle (40, 60, 70).

4. Sawbench according to one of Claims 1 or 3, characterised in that the gearing (20) is a bevel gearing (21; 71, 72).

5. Sawbench according to Claim 1, characterised in that the gearing (20) exhibits a ball or roller guide (79, 104-107) having a power-driven cage (82).

6. Sawbench according to Claim 1, characterised in that the gearing (20) is a toothed gearing having toothed rods (121, 122) and having gearwheels (120) which roll upon each other in the said toothed rods and are driven on their axle (126).

7. Sawbench according to Claim 1, characterised in that the gearing (20) comprises interconnected hydraulic or pneumatic cylinders (142, 143).

8. Sawbench according to one of the preceding Claims 3, 4 or 5, characterised in that the gearing (79, 104-107) embodies, at the same time, the guides for the displaceable carriage (17, 80, 100, 125).

9. Sawbench (1) having a flat bench top (2), intended for the support of workpieces, and having a sawing unit (8), disposed below bench level, driven by a motor and equipped with a saw blade (7), which sawing unit is displaceable on a carriage (17), disposed beneath bench level and guided in guides (19) connected to the sawbench (1), in the plane of the saw blade (7) along the level of the bench, the displacement of the sawing unit (8) being able to be generated by a two-armed lever (13), projecting over the bench top (2) of the sawbench (1) and having a handle (14) on one of the lever arms, characterised in that the other lever arm of the lever (13) is linked to a ring (63), axially fixed in relation to a rotatable sleeve (61), which rotatable sleeve (61) is provided with an internal and an external thread and which interacts, on the one hand, with a housing-fixed spindle (60) extending essentially horizontally along the bench top (2) and, on the other hand, with a nut (64), being rotationally fixed in relation to the sawbench (67) and being axially movable in relation to the spindle (60), which nut is connected to the carriage (17).

10. Sawbench according to one of the preceding claims, characterised in that the displacement of the sawing unit (12, 20, 45, 90) is to be realised alternatively or additionally by an electric servo-motor, which is connected by the preferably reducing gearing (20) to the sawing unit (8, 45, 90, 101).

11. Sawbench according to one of the preceding claims, characterised in that the lever (13, 34, 49, 62, 73, 93, 110, 128, 140) is disposed on the rear wall (11, 66) of the sawbench (1, 54, 67, 127, 149), which rear wall is remote from the direction of advancement of the saw blade (7, 46, 75, 91, 150).

12. Sawbench according to one of the preceding claims, characterised in that the lever (62, 49, 93, 110, 140) is mounted in a swivel joint (65, 94, 114, 134) disposed on the rear wall (11, 66, 113) of the sawbench (54, 67, 108).

13. Sawbench according to one of Claims 1 to 11, characterised in that the lever (13, 31, 73, 111, 128) penetrates the rear wall (11, 66, 113) of the sawbench (1, 108, 127).

14. Sawbench according to one of the preceding claims, characterised in that the lever (13, 31, 49, 62, 73, 93, 110, 128) is located in the plane of the saw blade (7, 46, 75).

15. Sawbench according to one of the preceding claims, characterised in that the lever (6, 28, 34, 52, 62, 73, 93, 110) reaches its end position near to the bench when the handle (14) is at a height of ca. 200 mm above the bench top (2, 55, 103, 151).

16. Sawbench according to one of the preceding claims, characterised in that the lever (6, 28, 34, 52, 62, 73, 93, 110) has a length of ca. 500 - 800 mm.

17. Sawbench according to one of the preceding claims, characterised in that the lever (13, 34, 49, 62, 73, 93, 110, 128, 140) exhibits a handle (14) running transversely to the direction of swivel.

18. Sawbench according to one of the preceding claims, characterised in that the sawbench (1, 54, 67, 127, 149) exhibits, on at least two sides, attachment rails (3, 56) for the fitting of stops (5) or additional bench top elements (155) for widening the bench (1, 54, 67, 127, 149).

19. Sawbench according to one of the preceding claims, characterised in that, as the sawing unit (8, 45, 90, 101), a portable circular saw can be inserted into the sawbench (1, 54, 67, 127, 149).

20. Sawbench according to one of the preceding claims, characterised in that it possesses removable mounting feet (10).

21. Sawbench according to one of the preceding claims, characterised in that a part (151) of the sawbench (149), for use as a panel saw, is displaceable.

22. Sawbench according to Claim 21, characterised in that the displaceable part (151) is constructed no longer than the fixed bench top (156) and is mounted in telescopic guides (152, 153).

## Revendications

1. Table de sciage (1) avec un plateau plan (2) prévu pour recevoir les pièces à usiner et avec une unité de sciage (8) disposée sous le plan de la table, entraînée par un moteur et équipée d'une lame de scie (7), unité que l'on peut déplacer dans le plan de la lame de scie (7) le long de la table sur un chariot (17) disposé en-dessous du plan de table et guidé dans des guides (19) reliés à la table de sciage (1), la translation de l'unité de sciage (8) pouvant être produite par un levier à deux bras (13) faisant saillie au-dessus du plateau (2) de la table de sciage (1) avec une poignée (14) sur l'un des bras de levier, table de sciage caractérisée en ce que l'autre bras de levier (13, 31, 49, 62, 73, 93, 110, 140) est relié à un organe de transmission démultiplicateur (22, 32, 44, 72, 82, 105, 120, 141), qui coopère au moins avec un deuxième organe de transmission (26, 34, 40, 70, 80, 107, 122/123, 144) mobile par rapport à la table de sciage (1), qui s'étend sensiblement le long du plateau de la table (2) et est relié au chariot (17).

2. Table de sciage selon la revendication 1, caractérisée en ce que la transmission (20) présente une manivelle de poussée (30).

3. Table de sciage selon la revendication 1, caractérisée en ce que la transmission (20) présente une broche (40, 60, 70).

4. Table de sciage selon l'une des revendications 1 ou 3, caractérisée en ce que la transmission (20) est une transmission à roues coniques (21 ; 71, 72).

5. Table de sciage selon la revendication 1, caractérisée en ce que la transmission (20) présente un guide à billes ou à galets (79, 104-107) avec une cage entraînée (82).

6. Table de sciage selon la revendication 1, caractérisée en ce que la transmission (20) est une transmission à denture avec des crémaillères (121, 122) et des roues dentées (120) roulant dedans et entraînées par leur axe (126).

7. Table de sciage selon la revendication 1, caractérisée en ce que la transmission (20) se compose de vérins (142, 143) hydrauliques ou pneumatiques reliés l'un à l'autre.

8. Table de sciage selon l'une des revendications précédentes 3, 4 ou 5, caractérisée en ce que la transmission (79, 104-107) comprend en même temps les guides pour le chariot pouvant coulisser (17, 80, 100, 125).

9. Table de sciage (1) avec un plateau plan (2) prévu pour recevoir les pièces à usiner et avec une unité de sciage (8) disposée sous le plan de la table, entraînée par un moteur et équipée d'une lame scie (7), unité que l'on peut déplacer dans le plan de la lame de scie (7) le long du plan de la table sur un chariot (17) disposé en-dessous du plan de la table et guidé dans des guides (19) reliés à la table de sciage (1), table de sciage dans laquelle on peut produire la translation de l'unité de sciage (8) au moyen d'un levier (13) à deux bras faisant saillie au-dessus du plateau (2) de la table de sciage (1) avec une poignée (14) sur l'un des bras de levier, table de sciage caractérisée en ce que l'autre bras du levier (13) est articulé sur une bague (63) fixe axialement par rapport à un manchon pouvant tourner (61), lequel manchon pouvant tourner (61) est pourvu d'un filetage intérieur et d'un filetage extérieur, et coopère d'une part avec une broche (60) solidaire du carter s'étendant sensiblement horizontalement le long du plateau (2) de la table et d'autre part avec un écrou (64) ne pouvant pas tourner par rapport à la table de sciage (67) et mobile axialement par rapport à la broche (60), écrou qui est relié au chariot (17).

10. Table de sciage selon l'une des revendications précédentes, caractérisée en ce que la translation de l'unité de sciage (12, 20, 45, 90) est de façon alternative ou additionnelle à mettre en oeuvre par un servo-moteur électrique, qui est en liaison par la transmission (20) de préférence démultiplicatrice avec l'unité de sciage (8, 45, 90, 101).

11. Table de sciage selon l'une des revendications précédentes, caractérisée en ce que le levier (13, 34, 49, 62, 73, 93, 110, 128, 140) est disposé sur la paroi arrière (11, 66) de la table de sciage (1, 54, 67, 127, 149) située à l'opposé du sens d'avancement de la lame de scie (7, 46, 75, 91, 150).

12. Table de sciage selon l'une des revendications précédentes, caractérisée en ce que le levier (62, 49, 93, 110, 140) est monté sur une articulation à charnière (65, 94, 114, 134) disposée sur la paroi arrière (11, 66, 113) de la table de sciage (54, 67, 108).

13. Table de sciage selon l'une des revendications 1 à 11, caractérisée en ce que le levier (13, 31, 73, 111, 128) passe à travers la paroi arrière (11, 66, 113) de la table de sciage (1, 108, 127).

14. Table de sciage selon l'une des revendications précédentes, caractérisée en ce que le levier (13, 31, 49, 62, 73, 93, 110, 128) se trouve dans le plan de la lame de scie (7, 46, 75).

15. Table de sciage selon l'une des revendications précédentes, caractérisée en ce que le levier (6, 28, 34, 52, 62, 73, 93, 110) atteint sa position terminale proche de la table, quand la poignée (14) se trouve à une hauteur d'environ 200 mm au-dessus du plateau de la table (2, 55, 103, 151).

16. Table de sciage selon l'une des revendications précédentes, caractérisée en ce que le levier (6, 28, 34, 52, 62, 73, 93, 110) présente une longueur d'environ 500 à 800 mm.

17. Table de sciage selon l'une des revendications précédentes, caractérisée en ce que le levier (13, 34, 49, 62, 73, 93, 110, 128, 140) présente une poignée (14) s'étendant transversalement au sens du pivotement.

18. Table de sciage selon l'une des revendications précédentes, caractérisée en ce que la table de sciage (1, 54, 67, 127, 149) a sur au moins deux côtés des bandeaux de fixation (3, 56) pour la mise en place de butées (5) ou d'éléments additionnels de plateaux (155) pour élargir la table (1, 54, 67, 127, 149).

19. Table de sciage selon l'une des revendications précédentes, caractérisée en ce que l'on peut monter comme unité de sciage (8, 45, 90, 101) une scie circulaire à main sur la table de sciage (1, 54, 67, 127, 149).

20. Table de sciage selon l'une des revendications précédentes, caractérisée en ce qu'elle possède des pieds amovibles (10).

21. Table de sciage selon l'une des revendications précédentes, caractérisée en ce qu'une partie (151) de la table de sciage (149) est translatable pour être utilisée comme scie circulaire pour mise au format.

22. Table de sciage selon la revendication 21, caractérisée en ce que la partie translatable (151) est réalisée de façon a n'être pas plus longue que le plateau fixe de la table (156) et est montée dans des guides télescopiques (152, 153).
